# EUROPÄISCHE PATENTANMELDUNG

(11) **EP 2 796 306 A1**
(43) Veröffentlichungstag der Anmeldung: **29.10.2014**
(21) Anmeldenummer: 13002199.1
(22) Anmeldetag: 25.04.2013
(51) Int. Cl.: B60D 5/00

(54) **Übergang zwischen zwei gelenkig miteinander verbundenen Fahrzeugen**

(71) Anmelder: Hübner GmbH & Co. KG, 34123 Kassel (DE)
(72) Erfinder: Goebels, Andre, 34134 Kassel (DE); Jünke, Volker, 34587 Felsberg (DE)
(74) Vertreter: Walther, Walther & Hinz GbR

(57) **Zusammenfassung**

Übergang (5) zwischen zwei gelenkig miteinander verbundenen Fahrzeugen (3, 4), umfassend einen Balg (6) mit im Eckbereich angeordneten Balgecken (10) mit am an die Balgecken (10) anschließenden im Einbauzustand horizontal ausgerichteten mindestens einen Balgabschnitt (20), wobei der horizontal ausgerichtete mindestens eine Balgabschnitt (20) eine Mehrzahl von quer zur Längsachse des Fahrzeugs verlaufende Wellen oder Falten aufweist, wobei bei einem horizontal ausgerichteten Balgabschnitt (20) mit einer verminderten Tiefe der einzelnen Wellen oder Falten zur Kompensation der hieraus resultierenden verminderten Auszugsweite der horizontal ausgerichtete Balgabschnitt (20) in sich elastisch nachgiebig ausgebildet ist.

## Beschreibung

Die Erfindung betrifft einen Übergang zwischen zwei gelenkig miteinander verbundenen Fahrzeugen, umfassend einen Balg mit im Eckbereich des Balges angeordneten Balgecken, mit am an die Balgecken anschließenden, im Einbauzustand horizontal ausgerichteten mindestens einen Balgabschnitt, wobei der horizontal ausgerichtete mindestens eine Balgabschnitt eine Mehrzahl von quer zur Längsachse des Fahrzeugs verlaufende Wellen oder Falten aufweist.

Ein Übergang der eingangs genannten Art ist aus dem Stand der Technik hinreichend bekannt. Ein solcher Übergang besteht üblicherweise aus einer Übergangsbrücke und einem die Übergangsbrücke und ggf. auch die gelenkige Verbindung zwischen den beiden Fahrzeugteilen umspannenden Balg. Der Balg ist hierbei im Querschnitt in etwa U- oder rechteckförmig umlaufend ausgebildet, wobei im Bodenbereich der Balg geöffnet werden kann. Bekannt ist allerdings auch im Bereich des Balgbodens an den Balgecken ansetzend ein Bodentuch vorzusehen. An den Balgecken angesetzt bedeutet, dass die horizontalen Schenkel der Balgecken das Bodentuch aufnehmen. In diesem Zusammenhang wird auf die DE 101 54 033 B4 verwiesen. Dort ist ein Faltenbalg beschrieben, der im Eckbereich im Bereich seiner horizontalen Schenkel wellenförmig ausläuft, und einen Balgboden aufnimmt, der ein Bodentuch aufweist, wobei das Bodentuch zur Stabilisierung mehrere Bügel aufweist, die mit den Balgrahmen verbunden sind. Zur Befestigung des Bodentuchs an den horizontalen Schenkeln der Balgecken ist ein Klettbandverschluss vorgesehen. Eine ähnliche Ausgestaltung eines Balges mit einem Balgboden ergibt sich aus der EP 0 631 890 B1.

Nun ist durchaus bekannt, dass ein Falten- oder Wellenbalg bei gegebener Wellen- oder Faltentiefe und der entsprechenden Anzahl von Wellen oder Falten eine bestimmte Auszugsweite in der Lage ist zur Verfügung zu stellen. Auch der Boden eines Balges muss insofern in der Lage sein eine entsprechende Auszugsweite zur Verfügung zu stellen. Nun sind aber im Bodenbereich die Platzverhältnisse teilweise durchaus beengt. Dies kann zum Teil daran liegen, dass wenn der Balg oberhalb der gelenkigen Verbindung zwischen den beiden Fahrzeugteilen geführt werden soll, der Platz in vertikaler Richtung durchaus eingeschränkt ist. Die Folge hiervon ist, dass die Wellen des Bodentuches nur eine gegenüber den Falten oder Wellen des Balges verminderte Tiefe aufweisen dürfen, andernfalls besteht die Gefahr der Beschädigung; es stellt sich insofern das Problem, wie bei derart beengten Platzverhältnissen der Balgboden eine zu dem Balg adäquate Auszugsweite zur Verfügung stellen kann.

Die gleiche Problematik stellt sich im Übrigen dann, wenn bei Niederflurfahrzeugen der Abstand von der Unterseite des Balgbodens zur Straße so gering ist, dass beispielsweise bei unebener Wegstrecke oder insbesondere auch bei Schnee und Eis die Gefahr besteht, dass der Balgboden über den Untergrund schleift. Die Nachteile sind evident; es ist bekannt, dass bei manchen Verkehrsbetrieben der Balgboden spätestens alle zwei Jahre ausgetauscht werden muss.

In vergleichbarer Weise kann sich das Problem für den Dachbereich eines Balges darstellen. Auch dort kann es zu Einschränkungen des zur Verfügung stehenden Bauraumes kommen, insbesondere wenn im Dachbereich Versorgungsleitungen zwischen den beiden Fahrzeugen verlaufen, oder ein Dachgelenk vorgesehen ist. Verschärft wird die Situation im Dachbereich dann, wenn es, wie bei Schienenfahrzeugen üblich, es zu einem Kurvenversatz der Fahrzeuge kommt.

Die der Erfindung zugrunde liegende Aufgabe besteht demzufolge darin, bei verminderter Tiefe der Wellen oder Falten des horizontal ausgerichteten Balgabschnitts, also des Balgbodens oder des Balgdaches gegenüber den Falten oder Wellen des Balges dennoch im Boden- oder Dachbereich eine zur Auszugsweite des Balges adäquate Auszugsweite zur Verfügung stellen zu können.

Zur Lösung der Aufgabe wird erfindungsgemäß vorgeschlagen, dass bei einem horizontal ausgerichteten Balgabschnitt mit einer verminderten Tiefe oder Höhe der einzelnen Wellen oder Falten zur Kompensation der hieraus resultierenden verminderten Auszugsweite der horizontal ausgerichtete Balgabschnitt in sich elastisch nachgiebig ausgebildet ist. Das heißt nichts anderes, als dass dann, wenn durch die Wellen des Balgbodens oder des Balgdaches als horizontal ausgerichtete Balgabschnitte nur eine gegenüber den Falten oder Wellen des Balges verminderte Auszugsweite zur Verfügung gestellt werden kann, diese Minderung der Auszugsweite durch eine höhere Eigenelastizität des Balgbodens oder Balgdaches kompensiert werden kann.

Vorteilhafte Merkmale und Ausgestaltungen ergeben sich aus den Unteransprüchen.

So kann insbesondere vorgesehen sein, dass der Balg als wellen- oder Faltenbalg ausgebildet ist, wobei die Verbindung zwischen dem z. B. wellenbalgartig ausgebildeten Balgboden und z. B. einem Faltenbalg, im Bereich des horizontalen Schenkels einer Balgecke durch z. B. Klettband bewerkstelligt werden kann. Das heißt, die Enden des Balgbodens liegen durch Klettband verbunden auf den auslaufenden Faltenenden des Balges auf. Die erfindungsgemäße Ausgestaltung hat insbesondere dann Vorteile, wenn der horizontal ausgerichtete Balgabschnitt oberhalb oder unterhalb eines Hindernisses stufenförmig verlaufend vorbeigeführt werden muss. Der stufenförmige Verlauf ist hierbei symmetrisch zur Mittellängsachse des Fahrzeuges, d. h. der Verlauf des Balgbodens oder des Balgdaches ist zu beiden Seiten der Mittellängsachse gleich. Er beginnt mit dem horizontalen Schenkel der Balgecke, setzt sich über einen stufenförmigen Abschnitt fort bis zu einem horizontal verlaufenden Abschnitt, der dann wiederum über einen stufenförmigen Abschnitt an den horizontalen Schenkel der gegenüberliegenden Balgecke anschließt. Das zuvor erwähnte Hindernis kann beispielsweise die gelenkige Verbindung im Bodenbereich zweier gelenkig miteinander verbundener Fahrzeuge sein. Durch ein Hindernis in Form einer solchen gelenkigen Verbindung zwischen den beiden Fahrzeugteilen ist es dann erforderlich, wenn der Balg zwischen der gelenkigen Verbindung und der Übergangsplattform oder Übergangsbrücke entlang geführt werden muss, die verminderte Auszugsweite des Balgbodens bedingt durch flachere Wellen oder Falten durch eine erhöhte Elastizität auszugleichen. Gleiches gilt in adäquater Weise auch für das Balgdach, da auch dort Hindernisse vorhanden sein können, wie beispielsweise Dachgelenke oder auch Kabelstränge, die zur Energieversorgung zwischen den beiden Fahrzeugteilen dienen.

Insofern ist, wie ausgeführt, insbesondere vorgesehen, den Verlauf des Balgbodens oder des Balgdaches von der Balgecke ausgehend stufenförmig auszubilden, um hierdurch im Eckbereich des Balges also im Bereich des Balgecken noch die maximale Tiefe der Falten oder Wellen ausnutzen zu können, um erst im Boden- oder Dachbereich beginnend mit dem stufenförmigen Übergangsbereich die Tiefe der Wellen oder Falten des Balgbodens oder des Balgdaches zu reduzieren. Das heißt, von dem horizontalen Schenkel der Balgecke ausgehend vermindert sich über den stufenförmig Verlauf die Tiefe der einzelnen Wellen oder Falten bis zum Erreichen des horizontal verlaufenden Abschnittes des Balgbodens oder des Balgdaches kontinuierlich, über den horizontalen Abschnitt verbeibt die Tiefe der Wellen oder Falten gleich; sie erhöht sich erst wieder im Bereich der Stufe bis zum Erreichen des horizontalen Schenkels der Balgecke. Ein solcher horizontal ausgerichteter Balgabschnitt weist üblicherweise ein Bodentuch mit mindestens einem Festigkeitsträger auf. Ein solcher Festigkeitsträger kann ein Gewebe, Gewirk oder Gestrick sein, wobei das Gewebe, Gewirk oder Gestrick vorteilhaft aus einzelnen in sich elastischen Fäden z. B. aus einem vernetzten Silikonkautschuk ausgebildet ist. Es hat sich herausgestellt, dass hierdurch bei einem Wellenbalg, dessen Wellen eine Tiefe von etwa 80 mm haben, die Wellen im Boden lediglich eine Tiefe von etwa 20 bis 30 mm aufweisen müssen, um dennoch bei einer Dehnfähigkeit der einzelnen Fäden von etwa 20 bis 30 % bei Verarbeitung als Gewebe die erforderliche Auszugsweite bei den üblichen Fahrzeugbewegungen, wie sie beim Fahren um eine Kurve, beim Fahren durch eine Senke oder über eine Kuppe oder auch bei einem Querversatz entstehen, zur Verfügung zu stellen.

Nach einem weiteren Merkmal der Erfindung ist vorgesehen, dass der Festigkeitsträger mit einem Elastomer beschichtet ist. Dies kann beispielsweise ein Silikonkautschuk in vernetzter Form sein. Des Weiteren kann vorgesehen sein, die Wellen oder Falten des horizontal ausgerichteten Balgabschnittes im Wellen- oder Faltengrund durch Balgabschnittsrahmen zu halten. Diese Balgabschnittsrahmen sind ebenfalls stufenförmig ausgebildet und im Bereich der horizontalen Schenkel des Balges mit den Balgrahmen verbunden.

Als Variante zu gesondert zu den Balgrahmen ausgebildeten Balgabschnittsrahmen für den horizontal ausgerichteten Balgabschnitt können die Balgrahmen auch durchgängig kastenförmig umlaufend ausgebildet sein und im Boden-/ oder Deckenbereich stufenförmig verlaufend gebogen sein.

Anhand der Zeichnungen wird die Erfindung nachstehend beispielhaft in Bezug auf den Balgboden näher erläutert. In adäquater Weise gelten die nachstehenden Ausführungen auf für das Balgdach.
- Fig. 1: zeigt zwei gelenkig miteinander verbundene Fahrzeuge, die durch einen Übergang mit einem Balg und einer Übergangsbrücke miteinander verbunden sind;
- Fig. 2: zeigt einen Schnitt gemäß der Linie II-II aus Fig. 1.

Die beispielsweise durch eine Kupplung 2 gelenkig miteinander verbundenen Fahrzeuge 3, 4 weisen zwischen den beiden Fahrzeugen einen Übergang 5 mit einem Balg 6 auf, wobei der Balg 6 eine Übergangsbrücke 7 überspannt.

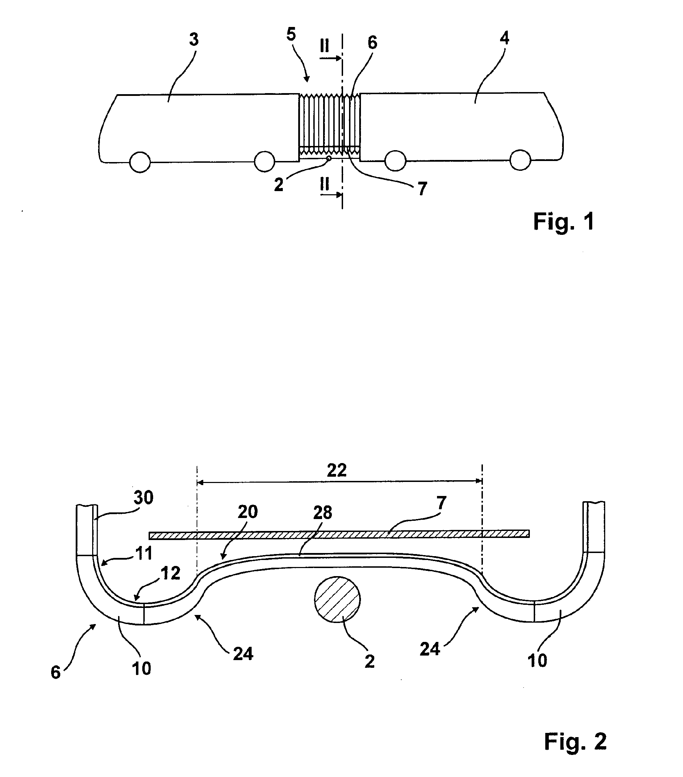

Gegenstand der Erfindung ist, wie sich dies aus der Darstellung gemäß Fig. 2 ergibt, die Ausbildung des Bodenbereiches und/oder Deckenbereich des Balges 6. Der Balg 6, der als Falten- oder Wellenbalg ausgebildet sein kann, vorzugsweise allerdings ein Wellenbalg ist, weist im Eckbereich des Bodens Balgecken 10 auf. Die Erfindung wird im Folgenden anhand des Balgbodens näher erläutert. Die Erläuterungen lassen sich auf die Ausgestaltung der Balgdecke entsprechend übertragen. Diese Balgecken 10 besitzen im Einbauzustand einen vertikalen Schenkel 11 und einen horizontalen Schenkel 12. An den horizontalen Schenkel 12 schließt sich der Balgboden 20 an. Der Balgboden 20 weist oberhalb der gelenkigen Verbindung 2 zwischen den beiden Fahrzeugteilen 3, 4 einen hochgesetzten Bodenabschnitt 22 auf, der sich mit einem stufenförmigen Übergang 24 an den horizontalen Schenkel 12 der Balgecke 10 anschließt. Aus der Darstellung gemäß Fig. 2 ist unmittelbar des Weiteren zu erkennen, dass die Wellentiefe bzw. auch die Faltentiefe im Eckbereich also im Bereich der Balgecke 10 noch mindestens der des Balges 6 entspricht. Dies ist auch erforderlich, da im Eckbereich des Balges eine wesentlich höhere Auszugsweite zur Verfügung stehen muss, als beispielsweise im gerade verlaufenden Seitenwandbereich des Balges 6. Erst im Bereich des auslaufenden horizontalen Schenkels 12 der Balgecke 10 vermindert sich die Wellentiefe des Balgbodens 20, und zwar kontinuierlich auslaufend im stufenförmigen Übergang 24. Der Balgboden 20 zeigt mehrere Balgabschnittsrahmen 28, die der Stabilisierung des Bodentuchs insgesamt dienen. Ist der Balgboden als Bodentuch ausgebildet, nehmen die Balgabschnittsrahmen das Bodentuch wellenförmig auf. Diese Balgabschnittsrahmen 28 sind mit den Balgrahmen 30 im Bereich der horizontalen Schenkel der Balgecken 10 verbunden.

**Bezugszeichenliste:**

| | |
|---|---|
| 2 | Kupplung |
| 3, 4 | Fahrzeugteile |
| 5 | Übergang |
| 6 | Balg |
| 7 | Übergangsbrücke |
| 10 | Balgecke |
| 11 | vertikaler Schenkel der Balgecke |
| 12 | horizontaler Schenkel der Balgecke |
| 20 | horizontal ausgerichteter Balgabschnitt |
| 22 | Bodenabschnitt |
| 24 | Übergang im Balgboden |
| 28 | Balgabschnittsrahmen |
| 30 | Balgrahmen |

## Patentansprüche

1. Übergang (5) zwischen zwei gelenkig miteinander verbundenen Fahrzeugen (3, 4), umfassend einen Balg (6) mit im Eckbereich angeordneten Balgecken (10) mit am an die Balgecken (10) anschließenden im Einbauzustand horizontal ausgerichteten mindestens einen Balgabschnitt (20), wobei der horizontal ausgerichtete mindestens eine Balgabschnitt (20) eine Mehrzahl von quer zur Längsachse des Fahrzeugs verlaufende Wellen oder Falten aufweist,
**dadurch gekennzeichnet,**
**dass** bei einem horizontal ausgerichteten Balgabschnitt (20) mit einer verminderten Tiefe der einzelnen Wellen oder Falten zur Kompensation der hieraus resultierenden verminderten Auszugsweite der horizontal ausgerichtete Balgabschnitt (20) in sich elastisch nachgiebig ausgebildet ist.

2. Übergang nach Anspruch 1;
**dadurch gekennzeichnet,**
**dass** der horizontal ausgebildete Balgabschnitt (20) der Balgboden ist.

3. Übergang nach Anspruch 1 oder 2,
**dadurch gekennzeichnet,**
**dass** der horizontal ausgerichtete Balgabschnitt (20) das Balgdach ist.

4. Übergang nach einem der voranstehenden Ansprüche,
**dadurch gekennzeichnet,**
**dass** der Balg (6) als Wellen- oder Faltenbalg ausgebildet ist.

5. Übergang nach einem der voranstehenden Ansprüche,
**dadurch gekennzeichnet,**
**dass** der horizontale ausgerichtete Balgabschnitt (20) stufenförmig verläuft.

6. Übergang nach einem der voranstehenden Ansprüche,
**dadurch gekennzeichnet,**
**dass** der horizontal ausgerichtete Balgabschnitt (20) im Bereich eines Hindernisses einen stufenförmigen Verlauf aufweist.

7. Übergang nach einem der voranstehenden Ansprüche,
**dadurch gekennzeichnet,**
**dass** der horizontal ausgerichtete Balgabschnitt (20) mindestens einen Festigkeitsträger aufweist, wobei der Festigkeitsträger in sich elastisch nachgiebig ausgebildet ist.

8. Übergang nach Anspruch 7,
**dadurch gekennzeichnet,**
**dass** der Festigkeitsträger in sich elastische Fäden aufweist.

9. Übergang nach Anspruch 8,
**dadurch gekennzeichnet,**
**dass** die Fäden aus einem vernetzten Silikonkautschuk ausgebildet sind.

10. Übergang nach Anspruch 8 oder 9,
**dadurch gekennzeichnet,**
**dass** der Festigkeitsträger mit einem Elastomer beschichtet ist.

11. Übergang nach einem der voranstehenden Ansprüche,
**dadurch gekennzeichnet,**
**dass** der Balg Balgrahmen (30) aufweist.

12. Übergang nach einem der voranstehenden Ansprüche,
**dadurch gekennzeichnet,**
**dass** die Balgrahmen (30) kastenförmig umlaufend ausgebildet sind, und im Bereich eines Hindernisses im Bereich des horizontal ausgerichteten Balgabschnittes (20) stufenförmig verlaufend ausgebildet sind.

13. Übergang nach einem der voranstehenden Ansprüche,
**dadurch gekennzeichnet,**
**dass** die Balgrahmen (30) im Bereich des horizontalen Balgabschnittes (20) über die Länge des horizontalen Balgabschnittes als Balgabschnittsrahmen (28) ein gesondertes Bauteil bilden, und mit den Balgrahmen (30) verbindbar sind.
